# EUROPÄISCHE PATENTSCHRIFT

(11) **EP 4 348 065 B1**
(45) Veröffentlichungstag und Bekanntmachung des Hinweises auf die Patenterteilung: **25.02.2026**
(21) Anmeldenummer: 22718623.6
(22) Anmeldetag: 25.03.2022
(51) Int. Cl.: F16B 5/02

(54) **KRAFTFAHRZEUG-BEFESTIGUNGSSYSTEM**
MOTOR VEHICLE SECURING SYSTEM
SYSTÈME DE FIXATION DE VÉHICULE AUTOMOBILE

(30) Priorität: 02.06.2021 DE 102021114365
(43) Veröffentlichungstag der Anmeldung: 10.04.2024
(73) Patentinhaber: HUF Hülsbeck & Fürst GmbH & Co. KG, 42551 Velbert (DE)
(72) Erfinder: LENNHOFF, Ralf, 58093 Hagen (DE); KITTEL, Thomas, 42555 Velbert (DE); BOTT, Ingo, 40625 Düsseldorf (DE)
(86) Internationale Anmeldenummer: PCT/EP2022/057912
(87) Internationale Veröffentlichungsnummer: WO 2022/253477

(56) Entgegenhaltungen:
- WO-A1-2013/011710
- DE-A1- 102008 061 822
- FR-A1- 2 768 199
- US-A- 6 092 953
- US-A1- 2014 241 830

## Beschreibung

Die Erfindung richtet sich auf ein Kraftfahrzeug-Befestigungssystem, bei welchem mit Hilfe einer Befestigungsvorrichtung ein erstes Kraftfahrzeug-Bauteil an einem zweiten Kraftfahrzeug-Bauteil befestigt ist.

Solche Kraftfahrzeug-Befestigungssysteme dienen zum Beispiel dazu, einen Träger für einen Türaußengriff oder einen Aktuator an einem Karosserieblech eines Kraftfahrzeugs zu befestigen. Zur Befestigung sind unterschiedliche Befestigungsmöglichkeiten bekannt, wie beispielsweise Schraubverbindungen unter Verwendung eines oder mehrerer Befestigungs-Schrauben sowie Nietverbindungen unter Verbindung eines oder mehrerer Nietbolzen. Darüber hinaus sind Klick- und Clips-Verbindungen aus dem Stand der Technik bekannt, um Aktuatoren oder andere Kraftfahrzeug-Bauteile an einem Karosserieblech eines Kraftfahrzeugs anzubringen, wobei die Klick- und Clips-Verbindungen dabei meistens entsprechend der von Fahrzeug zu Fahrzeug variierenden Wandstärke des Karosserieblechs anzupassen sind, so dass diese Verbindungsmöglichkeit eher nachrangig in Betracht gezogen wird. Bei Schraubverbindungen ist zum Beispiel bei der Montage eines Trägers an dem Karosserieblech ein Toleranzausgleich notwendig, weil unter anderem aufgrund von Fertigungstoleranzen die für die Befestigungs-Schraube vorgesehene Bohrung in dem Träger meist nicht fluchtend zu der Schrauben-Aufnahme in dem Karosserieblech angeordnet ist. Der erforderliche Toleranzausgleich erfordert in nachteiliger Weise einen zusätzlichen Montageaufwand.

Die FR 2 768 199 A1 zeigt ein Gleitbefestigungssystem für ein Kunststoffbauteil mit einer dünnen Wand, das an einem Träger befestigt wird. Um temperaturbedingte Ausdehnungen und Nachschrumpfungen des Kunststoffteils gegenüber der Fahrzeugstruktur auszugleichen und Verformungen zu vermeiden, wird eine dickere Zwischenlage (Entretoise) in einer länglichen Öffnung der Wand geführt. Diese Zwischenlage wird zunächst durch lösbare Vorpositionierungselemente gehalten und nach der Befestigung am Träger freigegeben, sodass das Bauteil relativ zum Träger gleiten kann. Das System ist einfach herstellbar, kostengünstig und erleichtert die Montage.

Der Erfindung liegt die Aufgabe zugrunde eine Lösung zu schaffen, die auf konstruktiv einfache Weise ein verbessertes und für die Montage komfortableres Kraftfahrzeug-Befestigungssystem bereitstellt.

Diese Aufgabe wird erfindungsgemäß gelöst durch ein Kraftfahrzeug-Befestigungssystem mit einem ersten Kraftfahrzeug-Bauteil, einem zweiten Kraftfahrzeug-Bauteil und wenigstens einer zur lösbaren Befestigung des ersten Kraftfahrzeug-Bauteils an dem zweiten Kraftfahrzeug-Bauteils ausgebildeten Befestigungsvorrichtung, wobei die wenigstens eine Befestigungsvorrichtung eine Befestigungs-Schraube, welche in eine in dem zweiten Kraftfahrzeug-Bauteil ausgebildete Schrauben-Aufnahme in eine Einschraub-Richtung eingeschraubt ist, und einen Schraubenhalter, welcher an dem ersten Kraftfahrzeug-Bauteil in einer quer zur Einschraub-Richtung verlaufenden Richtung bewegbar gelagert ist und mit einer sich in Richtung der Schrauben-Aufnahme erstreckenden und einen Abschnitt der Befestigungs-Schraube aufnehmenden Führungshülse ausgebildet ist, aufweist.

Vorteilhafte und zweckmäßige Ausgestaltungen und Weiterbildungen der Erfindung ergeben sich aus den Unteransprüchen.

Durch die Erfindung wird ein Kraftfahrzeug-Befestigungssystem zur Verfügung gestellt, welches sich durch eine einfache und kostengünstige Konstruktion auszeichnet. Das erste Kraftfahrzeug-Bauteil ist über die Befestigungsvorrichtung mit dem zweiten Kraftfahrzeug-Bauteil lösbar verbunden, wobei die lösbare Verbindung von einer Befestigungs-Schraube realisiert wird, die in eine in dem zweiten Kraftfahrzeug-Bauteil ausgebildete Schrauben-Aufnahme eingeschraubt ist. Erfindungsgemäß erfolgt eine fluchtende Ausrichtung für das Einschrauben der Befestigungs-Schraube über einen Schraubenhalter, welcher in einer quer zur Einschraub-Richtung verlaufenden Richtung bewegbar an dem ersten Kraftfahrzeug-Bauteil gelagert ist. Durch die bewegbare Lagerung des Schraubenhalters ist gewährleistet, dass die Führungshülse und damit die Befestigungs-Schraube fluchtend zu der Schrauben-Aufnahme ausgerichtet werden können, wodurch ein erforderlicher Toleranzausgleich auf einfache Weise derart realisiert ist, dass die Montage des ersten Kraftfahrzeug-Bauteils an dem zweiten Kraftfahrzeug-Bauteil in vorteilhafter Weise erleichtert ist.

Die Erfindung sieht gemäß Anspruch 1 weiterhin vor, dass auf einer dem zweiten Kraftfahrzeug-Bauteil abgewandten Seitenfläche des ersten Kraftfahrzeug-Bauteils eine Aufnahme mit einem Durchgangsloch und mit seitlichen Begrenzungswänden ausgebildet ist, in welcher der Schraubenhalter bewegbar gelagert ist. Der Schraubenhalter ist gemäß dieser Ausgestaltung nicht beliebig an dem ersten Kraftfahrzeug-Bauteil angeordnet. Vielmehr ist an dem ersten Kraftfahrzeug-Bauteil ein definierter Bereich in Form der mit Begrenzungswänden ausgestatteten Aufnahme vorgesehen, wobei die Begrenzungswände lediglich für eine Ausgangsstellung des Schraubenhalters sorgen, bevor die Befestigungs-Schraube festgeschraubt wird. Denn vor dem Vorgang des Festschraubens ist eine Ausrichtung des Schraubenhalters quer zu der Einschraub-Richtung der Befestigungs-Schraube möglich, um die Befestigungs-Schraube in Flucht zu der Schrauben-Aufnahme auszurichten.

Eine Bewegung des Schraubenhalters zum Toleranzausgleich ist auf konstruktiv einfache Weise dadurch möglich, dass die Führungshülse einen Querschnitt aufweist, welcher kleiner als das Durchgangsloch ausgebildet ist, wobei sich die Führungshülse durch das Durchgangsloch hindurch erstreckt. Gleichzeitig ist auf diese Weise eine kompakte und wenig Bauraum beanspruchende Möglichkeit der Ausbildung der Befestigungsvorrichtung gegeben.

Die Erfindung sieht in weiterer Ausgestaltung vor, dass der Schraubenhalter mit einer Grundplatte ausgebildet ist, durch welche sich die Führungshülse hindurch erstreckt und welche auf der dem zweiten Kraftfahrzeug-Bauteil abgewandten Seitenfläche des ersten Kraftfahrzeug-Bauteils und innerhalb der Aufnahme angeordnet ist. Die Grundplatte des Schraubenhalters ist somit in der Aufnahme des ersten Kraftfahrzeug-Bauteils angeordnet, so dass die Grundplatte bei Montage gegen das erste Kraftfahrzeug-Bauteil drängt, wenn die Befestigungs-Schraube in die Schrauben-Aufnahme eingeschraubt wird.

Damit der Schraubenhalter eine gewisse Grundposition an dem ersten Kraftfahrzeug-Bauteil einnehmen kann, in welcher die Führungshülse zumindest annähernd auf die Schrauben-Aufnahme ausgerichtet ist und nicht die Schwerkraft die Führungshülse in eine unrealistisch entfernte Position zu der Schrauben-Aufnahme drängt, ist in Ausgestaltung der Erfindung vorgesehen, dass an der Grundplatte des Schraubenhalters mehrere Ausgleichselemente angeformt sind, welche sich in eine quer zu der Einschraub-Richtung verlaufende Richtung erstrecken und welche federelastisch und eine Bewegung des Schraubenhalters innerhalb der Aufnahme in Richtung einer seitlichen Begrenzungswand erlaubend ausgebildet sind.

In Ausgestaltung der Erfindung ist dann ferner vorgesehen, dass an der Führungshülse des Schraubenhalters mehrere Greifarme ausgebildet sind, welche sich derart von der Führungshülse weg erstrecken, dass die mehreren Greifarme über das Durchgangsloch der Aufnahme hinweg ragen und auf einer dem zweiten Kraftfahrzeug-Bauteil zugewandten Seitenfläche des ersten Kraftfahrzeug-Bauteils das zweite Kraftfahrzeug-Bauteil hintergreifen. Der Schraubenhalter ist auf diese einfache Weise an dem ersten Kraftfahrzeug-Bauteil angebracht.

Hinsichtlich einer einfachen Vormontage ist es in weiterer Ausgestaltung der Erfindung von Vorteil, wenn die mehreren Greifarme derart elastisch verformbar ausgebildet sind, dass die mehreren Greifarme unter einer elastischen Verformung durch das Durchgangsloch der Aufnahme hindurch in Richtung des ersten Kraftfahrzeug-Bauteils steckbar ausgebildet sind. Zusätzlich kann ein jeder Greifarm eine von dem zweiten Kraftfahrzeug-Bauteil wegweisende Krümmung aufweisen, was die Steckbarkeit weiter erleichtert.

Zusätzlich zu dem innerhalb der Aufnahme in zwei Raumrichtungen bewegbar gelagerten Schraubenhalter ist ein Toleranzausgleich auch in eine dritte Raumrichtung möglich. Hierzu sieht die Erfindung gemäß Anspruch 1 vor, dass die Aufnahme über ein elastisch verformbar ausgebildetes Ausgleichsmittel derart mit dem ersten Kraftfahrzeug-Bauteil verbunden ist, dass die Aufnahme in die Einschraub-Richtung zu dem ersten Kraftfahrzeug-Bauteil relativ bewegbar und anordenbar ist.

Diesbezüglich sieht die Erfindung in weiterer Ausgestaltung für eine Bewegung des Schraubenhalters in die dritte Raumrichtung vor, dass das Ausgleichsmittel als ein im Querschnitt gebogener Steg ausgebildet ist, über welchen die Aufnahme mit dem ersten Kraftfahrzeug-Bauteil verbunden ist.

Schließlich ist in Ausgestaltung der Erfindung vorgesehen, dass die Befestigungs-Schraube an einem ersten Längsende mit einem im Querschnitt verbreiterten Schraubkopf, welcher auf dem Schraubenhalter aufliegend den Schraubenhalter gegen das erste Kraftfahrzeug-Bauteil verspannt, und an einem zweiten Längsende mit einem sich verjüngend ausgebildeten Einschraubende, welches in die Schrauben-Aufnahme das erste Kraftfahrzeug-Bauteil an dem zweiten Kraftfahrzeug-Bauteil befestigend eingeschraubt ist, ausgebildet ist.

Es versteht sich, dass die vorstehend genannten und nachstehenden noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen. Der Rahmen der Erfindung ist nur durch die Ansprüche definiert.

Weitere Einzelheiten, Merkmale und Vorteile des Gegenstandes der Erfindung ergeben sich aus der nachfolgenden Beschreibung im Zusammenhang mit der Zeichnung, in der ein beispielhaftes und bevorzugtes Ausführungsbeispiel der Erfindung dargestellt ist.

In der Zeichnung zeigt:
Figur 1 eine schematische Perspektivansicht auf eine als ein zweites Kraftfahrzeug-Bauteil ausgebildete Kraftfahrzeugtür und einen innenseitig an der Kraftfahrzeugtür angebrachten und als ein erstes Kraftfahrzeug-Bauteil ausgebildeten Träger,
Figur 2 eine perspektivische Rückansicht auf einen Teil des als das erste Kraftfahrzeug-Bauteil ausgebildeten Trägers,
Figur 3 eine seitliche Detailansicht auf das erste Kraftfahrzeug-Bauteil, welches mit Hilfe einer Befestigungsvorrichtung lösbar an dem zweiten Kraftfahrzeug-Bauteil befestigt ist,
Figur 4 eine seitliche Schnittdarstellung für die Darstellung der Figur 3,
Figur 5 eine perspektivische Vorderansicht auf ein Detail des ersten Kraftfahrzeug-Bauteils und der Befestigungsvorrichtung,
Figur 6 eine perspektivische Rückansicht auf das erste Kraftfahrzeug-Bauteil und der Befestigungsvorrichtung,
Figur 7 eine Einzelteildarstellung eines Schraubenhalters, einer Befestigungs-Schraube und eines Details des ersten Kraftfahrzeug-Bauteils,
Figur 8 eine perspektivische Ansicht auf den Schraubenhalter,
Figur 9 eine Seitenansicht auf den Schraubenhalter und
Figur 10 eine Draufsicht auf den Schraubenhalter.

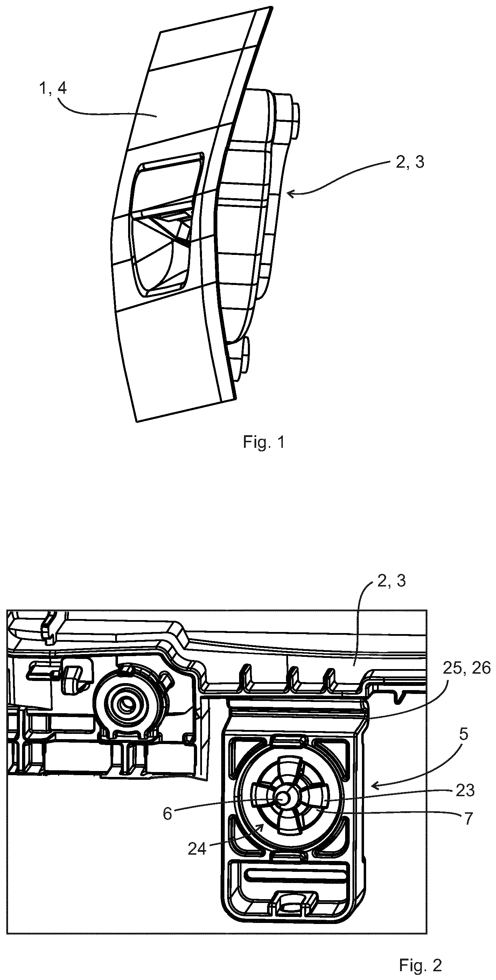

In Figur 1 ist ein exemplarisches Ausführungsbeispiel der Erfindung dargestellt, wobei in einer Perspektivansicht eine Fahrzeugtür 1 und ein innenseitig an der Fahrzeugtür 1 befestigter und einen Türaußengriff lagernder Träger 2 gezeigt sind, auf die die Erfindung angewandt ist. Dabei stellen im Sinne der Erfindung der Träger 2 ein erstes Kraftfahrzeug-Bauteil 3 und die Fahrzeugtür 1 ein zweites Kraftfahrzeug-Bauteil 4 dar. Es versteht sich, dass die Erfindung auch für andere Bauteile eines Kraftfahrzeugs realisierbar ist, wenn ein erstes Kraftfahrzeug-Bauteil an einem zweiten Kraftfahrzeug-Bauteil befestigt werden soll.

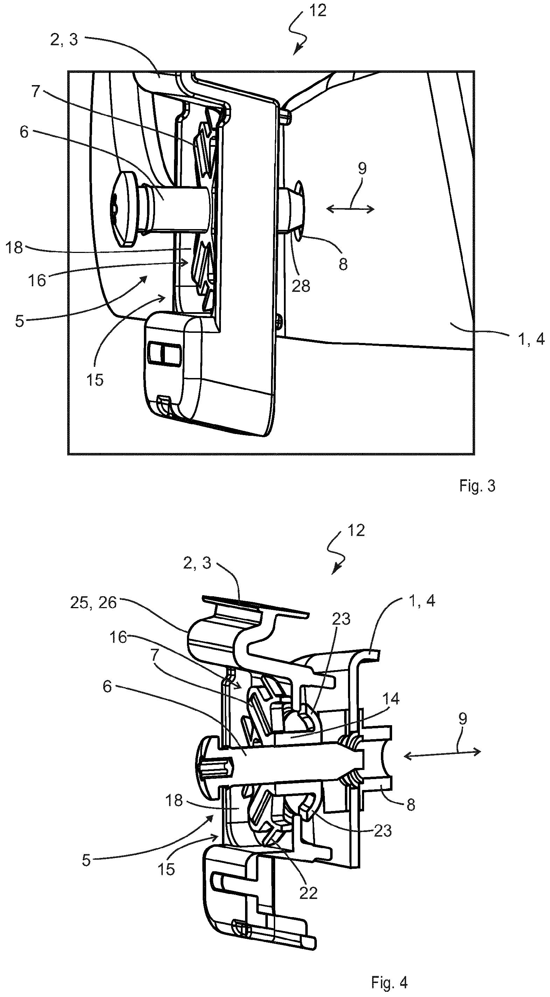

Die Figur 2 zeigt eine perspektivische Rückansicht auf einen Teil des als das erste Kraftfahrzeug-Bauteil 3 ausgebildeten Trägers 2, welcher neben der Lagerung des Türaußengriffs zusätzlich Funktionsbauteile lagern kann, wie zum Beispiel elektronische oder mechanische Bauteile. An dem zweiten Kraftfahrzeug-Bauteil 3 bzw. an dem Träger 2 ist eine Befestigungsvorrichtung 5 angeordnet, welche eine Befestigungs-Schraube 6 und einen Schraubenhalter 7 aufweist, die zusammenwirkend das erste Kraftfahrzeug-Bauteil 3 an dem zweiten Kraftfahrzeug-Bauteil 4 lösbar befestigen. Dabei ist die Befestigungsvorrichtung 5 an einer Art Lasche an dem Träger angeordnet. In den Figuren 3 bis 7 ist lediglich dieser laschenartige Abschnitt des Trägers 2 bzw. des ersten Kraftfahrzeug-Bauteils 3 gezeigt.

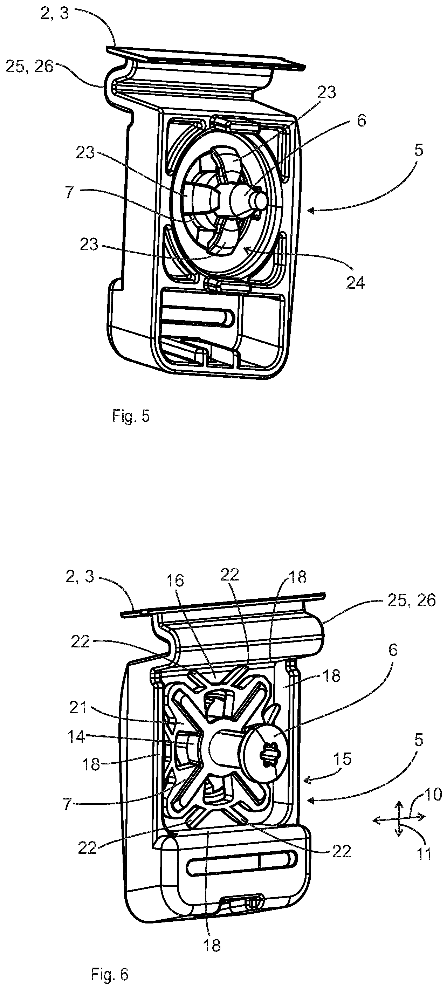

Wie nachstehend noch genauer beschrieben wird, ist die Befestigungs-Schraube 6 in eine in dem zweiten Kraftfahrzeug-Bauteil 4 bzw. der Fahrzeugtür 1 ausgebildete Schrauben-Aufnahme 8 in eine Einschraub-Richtung 9, welche die z-Richtung ist, eingeschraubt, wobei der Schraubenhalter 7 an dem ersten Kraftfahrzeug-Bauteil 3 bzw. dem in einer quer zu der Einschraub-Richtung 9 verlaufenden Richtung 10 oder 11, welche die x-Richtung und/oder die y-Richtung sind, bewegbar gelagert ist (siehe zum Beispiel auch Figur 6). Für die Erfindung bilden das erste Kraftfahrzeug-Bauteil 3, das zweite Kraftfahrzeug-Bauteil 4 und die wenigstens eine zur lösbaren Befestigung des ersten Kraftfahrzeug-Bauteils 3 an dem zweiten Kraftfahrzeug-Bauteils 4 ausgebildete Befestigungsvorrichtung 5 ein Kraftfahrzeug-Befestigungssystem 12 aus, wobei es denkbar ist, dass zur Befestigung mehr als eine Befestigungsvorrichtung 5 verwendet wird. Der Schraubenhalter 7 ist mit einer sich in Richtung der Schrauben-Aufnahme 8 erstreckenden und einen Abschnitt der Befestigungs-Schraube 6 aufnehmenden Führungshülse 14 ausgebildet, wie es zum Beispiel aus der Schnittdarstellung der Figur 4 ersichtlich ist.

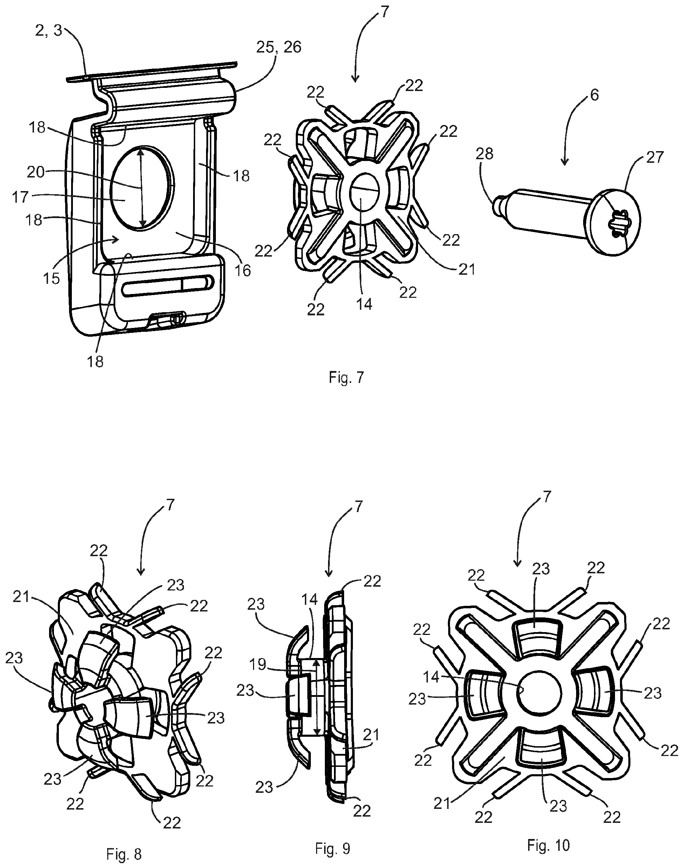

Zur beweglichen Lagerung des Schraubenhalters 7 ist auf einer dem zweiten Kraftfahrzeug-Bauteil 4 abgewandten Seitenfläche 15 des ersten Kraftfahrzeug-Bauteils 3 eine Aufnahme 16 mit einem Durchgangsloch 17 ausgebildet, wobei die Aufnahme 16 seitliche Begrenzungswände 18 aufweist. Dabei ist der Schraubenhalter 7 in der Aufnahme 16 bewegbar gelagert. Genauer gesagt ist der Schraubenhalter 7 in der Aufnahme 16 nach Art einer schwimmenden Lagerung in x-Richtung 10 und/oder in y-Richtung 11 und damit quer zu der Einschraubrichtung 9 der Befestigungs-Schraube 6 bewegbar gelagert, um die Befestigungs-Schraube 6 zu der Schrauben-Aufnahme 8 ausrichten und Toleranzen beim Einbau ausgleichen zu können. Das Durchgangsloch 17 und die Begrenzungswände 18 der Aufnahme 16 des ersten Kraftfahrzeug-Bauteils 3 sind beispielsweise aus der Einzelteildarstellung der Figur 7 ersichtlich. Da sich die Führungshülse 14 durch das Durchgangsloch 17 hindurch erstreckt, weist zur Ausrichtung der Befestigungs-Schraube 6 die Führungshülse 14 einen Querschnitt 19 (siehe zum Beispiel Figur 9) auf, welcher kleiner als der Durchmesser 20 (siehe zum Beispiel Figur 7) des Durchgangslochs 17 ausgebildet ist. Somit kann der Schraubenhalter 7 beliebig in x-Richtung 10 und/oder in y-Richtung 11 zur Ausrichtung der Befestigungs-Schraube 6 auf die Schrauben-Aufnahme 8 ausgerichtet werden.

Aus den Figuren 7, 8, 9 und 10 ist ferner ersichtlich, dass der Schraubenhalter 7 mit einer Grundplatte 21 ausgebildet ist. Die Grundplatte 21 liegt bei Montage des Kraftfahrzeug-Befestigungssystems 12 auf dem Boden der Aufnahme 16 bzw. auf der Seitenfläche 15 auf. Dabei erstreckt sich die Führungshülse 14 durch die innerhalb der Aufnahme 16 angeordnete Grundplatte 21 hindurch, wobei die auf der dem zweiten Kraftfahrzeug-Bauteil 4 abgewandten Seitenfläche 15 des ersten Kraftfahrzeug-Bauteils 3 angeordnete Grundplatte 21 mit einer kleineren räumlichen Erstreckung ausgebildet ist als die Aufnahme 16, so dass die Grundplatte 21 innerhalb der Aufnahme 16 beliebig in x-Richtung 10 und/oder in y-Richtung 11 bewegbar ist.

Wie insbesondere aus den Figuren 6 bis 10 hervorgeht, sind an der Grundplatte 21 des Schraubenhalters 7 mehrere Ausgleichselemente 22 angeformt. Diese Ausgleichselemente 22 dienen dazu, den Schraubenhalter 7 innerhalb der Aufnahme 16 gegenüber der Schwerkraft abzustützen, was die Ausrichtung der Führungshülse 14 und damit der Befestigungs-Schraube 6 auf die Schrauben-Aufnahme 8 und gleichzeitig die Montage erleichtert. Die Ausgleichselemente 22 sind gleichmäßig um den Umfang der Grundplatte 21 herum verteilt angeordnet und erstrecken sich damit jeweils in x-Richtung 10 und in y-Richtung 11, so dass die Ausgleichselemente 22 sich insgesamt in eine quer zu der Einschraub-Richtung 9 verlaufenden Richtung erstrecken. In dem dargestellten Ausführungsbeispiel sind die Ausgleichselemente 22 als eine Art Flügelpärchen ausgebildet, wobei ein jeweiliges Flügelpärchen an einem Seitenrand der Grundplatte 21 angeordnet ist. Hinsichtlich der bewegbaren Lagerung des Schraubenhalters 7 innerhalb der Aufnahme 16 sind die Ausgleichselemente 22 federelastisch und eine Bewegung des Schraubenhalters 7 innerhalb der Aufnahme 16 in Richtung einer der seitlichen Begrenzungswände 18 erlaubend ausgebildet. Wenn folglich ein Ausgleichselement 22 in Anlage an eine der seitlichen Begrenzungswände 18 gelangt, dann gibt das Ausgleichselement 22 elastisch nach und erlaubt die entsprechende Bewegung bzw. Verschiebung des Schraubenhalters 7 innerhalb der Aufnahme 16.

Zur Vereinfachung der Montage sind das erste Kraftfahrzeug-Bauteil 3 mit der daran ausgebildeten Aufnahme 16 und der Schraubenhalter 7 als separate Bauteile ausgebildet, die erst bei der Montage miteinander beweglich verbunden werden. Zu diesem Zweck sind an der an der Führungshülse 14 des Schraubenhalters 7 mehrere Greifarme 23 ausgebildet. Diese Greifarme 23 sind derart elastisch verformbar ausgebildet, dass zur Anbringung des Schraubenhalters 7 an dem ersten Kraftfahrzeug-Bauteil 2, 3 die mehreren Greifarme 23 unter einer elastischen Verformung durch das Durchgangsloch 17 der Aufnahme 16 hindurch in Richtung des ersten Kraftfahrzeug-Bauteils 3 steckbar ausgebildet sind, wie es die Einzelteildarstellung der Figur 7 suggerieren soll. Die Greifarme 23 erstrecken sich ferner derart von der Führungshülse 14 weg, dass die mehreren Greifarme 23 über das Durchgangsloch 17 der Aufnahme 16 hinweg ragen und auf einer dem zweiten Kraftfahrzeug-Bauteil 4 zugewandten Seitenfläche 24 des ersten Kraftfahrzeug-Bauteils 3 das zweite Kraftfahrzeug-Bauteil 4 hintergreifen, wie es zum Beispiel aus der Schnittdarstellung der Figur 4 ersichtlich ist.

Die Ausrichtung der Befestigungs-Schraube 6 wird gemäß dem dargestellten Ausführungsbeispiel dadurch erleichtert, indem die Befestigungs-Schraube 6 an einem ersten Längsende mit einem im Querschnitt verbreiterten Schraubkopf 27 und an einem zweiten Längsende mit einem sich verjüngend ausgebildeten Einschraubende 28 ausgebildet ist, wie es aus Figur 7 ersichtlich ist. Der verbreiterte Schraubkopf 27 verspannt dabei bei Montage den Schraubenhalter 7 gegen das erste Kraftfahrzeug-Bauteil 3, wobei der verbreiterte Schraubenkopf 27 auf dem Schraubenhalter 7 bzw. auf der Grundplatte 21 und/oder auf einem Längsende der Führungshülse 14 des Schraubenhalters 7 aufliegt. Das sich verjüngend ausgebildete Einschraubende 28 der Befestigungs-Schraube 6 erleichtert hingegen die Ausrichtung auf die Schrauben-Aufnahme 8, wobei im montierten Zustand das Einschraubende 28 in die Schrauben-Aufnahme 8 das erste Kraftfahrzeug-Bauteil 3 an dem zweiten Kraftfahrzeug-Bauteil 4 befestigend eingeschraubt ist.

Für einen Toleranzausgleich in die dritte Raumrichtung, welche die z-Richtung bzw. die Einschraubrichtung 9 ist, ist die Aufnahme 16 über ein elastisch verformbar ausgebildetes Ausgleichsmittel 25 derart mit dem ersten Kraftfahrzeug-Bauteil 3 verbunden, dass die Aufnahme 16 in die Einschraub-Richtung 9 zu dem ersten Kraftfahrzeug-Bauteil 3 relativ bewegbar und anordenbar ist. Dieses Ausgleichsmittel 25 ist also nachgebend ausgebildet, wenn die Befestigungs-Schraube 6 festgeschraubt wird. Wie den Figuren 2, 4, 5 und 6 entnommen werden kann, ist dabei das Ausgleichsmittel 25 als ein im Querschnitt gebogener Steg 26 ausgebildet.

Die beschriebene Erfindung ist selbstverständlich nicht auf die beschriebene und dargestellte Ausführungsform beschränkt. An der in der Zeichnung dargestellten Ausführungsform können zahlreiche, dem Fachmann entsprechend der beabsichtigten Anwendung naheliegende Abänderungen vorgenommen werden, ohne dass dadurch der Bereich der Erfindung verlassen wird, solange diese unter den Wortlaut der Ansprüche fallen.

### Bezugszeichenliste

1 Fahrzeugtür
2 Träger
3 erstes Kraftfahrzeug-Bauteil
4 zweites Kraftfahrzeug-Bauteil
5 Befestigungsvorrichtung
6 Befestigungs-Schraube
7 Schraubenhalter
8 Schrauben-Aufnahme
9 Einschraub-Richtung
10 x-Richtung
11 y-Richtung
12 Kraftfahrzeug-Befestigungssystem
14 Führungshülse
15 Seitenfläche
16 Aufnahme
17 Durchgangsloch
18 Begrenzungswände
19 Querschnitt von 14
20 Durchmesser von 17
21 Grundplatte
22 Ausgleichselemente
23 Greifarme
24 Seitenfläche
25 Ausgleichsmittel
26 Steg
27 verbreiteter Schraubenkopf
28 Einschraubende

## Patentansprüche

1. Kraftfahrzeug-Befestigungssystem (12) mit einem ersten Kraftfahrzeug-Bauteil (2, 3), einem zweiten Kraftfahrzeug-Bauteil (1, 4) und wenigstens einer zur lösbaren Befestigung des ersten Kraftfahrzeug-Bauteils (2, 3) an dem zweiten Kraftfahrzeug-Bauteils (1, 4) ausgebildeten Befestigungsvorrichtung (5),
wobei die wenigstens eine Befestigungsvorrichtung (5) eine Befestigungs-Schraube (6), welche in eine in dem zweiten Kraftfahrzeug-Bauteil (1, 4) ausgebildete Schrauben-Aufnahme (8) in eine Einschraub-Richtung (9) eingeschraubt ist, und einen Schraubenhalter (7), welcher an dem ersten Kraftfahrzeug-Bauteil (2, 3) in einer quer zu der Einschraub-Richtung (9) verlaufenden Richtung (10, 11) bewegbar gelagert ist und mit einer sich in Richtung der Schrauben-Aufnahme (8) erstreckenden und einen Abschnitt der Befestigungs-Schraube (6) aufnehmenden Führungshülse (14) ausgebildet ist, aufweist, wobei auf einer dem zweiten Kraftfahrzeug-Bauteil (1, 4) abgewandten Seitenfläche (15) des ersten Kraftfahrzeug-Bauteils (2, 3) eine Aufnahme (16) mit einem Durchgangsloch (17) und mit seitlichen Begrenzungswänden (18) ausgebildet ist, in welcher der Schraubenhalter (7) bewegbar gelagert ist,
**dadurch gekennzeichnet, dass**
die Aufnahme (16) über ein elastisch verformbar ausgebildetes Ausgleichsmittel (25) derart mit dem ersten Kraftfahrzeug-Bauteil (2, 3) verbunden ist, dass die Aufnahme (16) in die Einschraub-Richtung (9) zu dem ersten Kraftfahrzeug-Bauteil (2, 3) relativ bewegbar und anordenbar ist.

2. Kraftfahrzeug-Befestigungssystem (12) nach Anspruch 1, wobei die Führungshülse (14) einen Querschnitt (19) aufweist, welcher kleiner als das Durchgangsloch (17) ausgebildet ist, wobei sich die Führungshülse (14) durch das Durchgangsloch (17) hindurch erstreckt.

3. Kraftfahrzeug-Befestigungssystem (12) nach Anspruch 1 oder 2, wobei der Schraubenhalter (7) mit einer Grundplatte (21) ausgebildet ist, durch welche sich die Führungshülse (14) hindurch erstreckt und welche auf der dem zweiten Kraftfahrzeug-Bauteil (1, 4) abgewandten Seitenfläche (15) des ersten Kraftfahrzeug-Bauteils (2, 3) und innerhalb der Aufnahme (16) angeordnet ist.

4. Kraftfahrzeug-Befestigungssystem (12) nach Anspruch 3, wobei an der Grundplatte (21) des Schraubenhalters (7) mehrere Ausgleichselemente (22) angeformt sind, welche sich in eine quer zu der Einschraub-Richtung (9) verlaufende Richtung erstrecken und welche federelastisch und eine Bewegung des Schraubenhalters (7) innerhalb der Aufnahme (16) in Richtung einer der seitlichen Begrenzungswände (18) erlaubend ausgebildet sind.

5. Kraftfahrzeug-Befestigungssystem (12) nach einem der Ansprüche 1 bis 4, wobei an der Führungshülse (14) des Schraubenhalters (7) mehrere Greifarme (23) ausgebildet sind, welche sich derart von der Führungshülse (14) weg erstrecken, dass die mehreren Greifarme (23) über das Durchgangsloch (17) der Aufnahme (16) hinweg ragen und auf einer dem zweiten Kraftfahrzeug-Bauteil (1, 4) zugewandten Seitenfläche (24) des ersten Kraftfahrzeug-Bauteils (2, 3) das zweite Kraftfahrzeug-Bauteil (1, 4) hintergreifen.

6. Kraftfahrzeug-Befestigungssystem (12) nach Anspruch 5, wobei die mehreren Greifarme (23) derart elastisch verformbar ausgebildet sind, dass zur Anbringung des Schraubenhalters (7) an dem ersten Kraftfahrzeug-Bauteil (2, 3) die mehreren Greifarme (23) unter einer elastischen Verformung durch das Durchgangsloch (17) der Aufnahme (16) hindurch in Richtung des ersten Kraftfahrzeug-Bauteils (2, 3) steckbar ausgebildet sind.

7. Kraftfahrzeug-Befestigungssystem (12) nach Anspruch 1, wobei das Ausgleichsmittel (25) als ein im Querschnitt gebogener Steg (26) ausgebildet ist.

8. Kraftfahrzeug-Befestigungssystem (12) nach einem der vorhergehenden Ansprüche, wobei die Befestigungs-Schraube (6) an einem ersten Längsende mit einem im Querschnitt verbreiterten Schraubkopf (27), welcher auf dem Schraubenhalter (7) aufliegend den Schraubenhalter (7) gegen das erste Kraftfahrzeug-Bauteil (2, 3) verspannt, und an einem zweiten Längsende mit einem sich verjüngend ausgebildeten Einschraubende (28) ausgebildet ist, welches in die Schrauben-Aufnahme (8) das erste Kraftfahrzeug-Bauteil (2, 3) an dem zweiten Kraftfahrzeug-Bauteil (1, 4) befestigend eingeschraubt ist.

## Claims

1. Motor vehicle fastening system (12) with a first motor vehicle component (2, 3), a second motor vehicle component (1, 4) and at least one fastening apparatus (5) designed to fasten the first motor vehicle component (2, 3) detachably to the second motor vehicle component (1, 4),
wherein the at least one fastening apparatus (5) includes a fastening screw (6) which is screwed in a screw-in direction (9) into a screw socket (8) formed in the second motor vehicle component (1, 4), and a screw holder (7) which is mounted on the first motor vehicle component (2, 3) so as to be movable in a direction (10, 11) extending transversely to the screw-in direction (9) and is constructed with a guide bushing (14) that extends in the direction of the screw socket (8) and accommodates a portion of the fastening screw (6), wherein a mounting (16) with a through-hole (17) and with lateral limiting walls (18) is formed on a lateral surface (15) of the first motor vehicle component (2, 3) facing away from the second motor vehicle component (1, 4), in which mounting the screw holder (7) is mounted movably,
**characterized in that**
the mounting (16) is connected to the first motor vehicle component (2, 3) via an elastically deformable compensating means (25) in such manner that the mounting (16) can be moved in the screw-in direction (9) and disposed relatively to the first motor vehicle component (2, 3).

2. Motor vehicle fastening system (12) according to Claim 1, wherein the guide bushing (14) has a cross-section (19) that is smaller than the through-hole (17), wherein the guide bushing (14) protrudes through the through-hole (17).

3. Motor vehicle fastening system (12) according to Claim 1 or 2, wherein the screw holder (7) is constructed with a base plate (21) through which the guide bushing (14) protrudes extends, and which is arranged on the lateral surface (15) of the first motor vehicle component (2, 3) facing away from the second motor vehicle component (1, 4) and inside the mounting (16).

4. Motor vehicle fastening system (12) according to Claim 3, wherein a plurality of compensating elements (22) are formed on the base plate (21) of the screw holder (7), which elements extend in a direction transverse to the screw-in direction (9) and are of resilient construction, allowing a movement of the screw holder (7) inside the mounting (16) in the direction of one of the lateral limiting walls (18).

5. Motor vehicle fastening system (12) according to any one of Claims 1 to 4, wherein a plurality of gripper arms (23) are formed on the guide bushing (14) of the screw holder (7), and extend away from the guide bushing (14) in such manner that the plurality of gripper arms (23) pass beyond the through-hole (17) in the mounting (16) and clasp the second motor vehicle component (1, 4) from behind on a lateral surface (24) of the first motor vehicle component (2, 3) facing towards the second motor vehicle component (1, 4).

6. Motor vehicle fastening system (12) according to Claim 5, wherein the plurality of gripper arms (23) are designed to be elastically deformable in such manner that in order to bring the screw holder (7) towards the first motor vehicle component (2, 3) the plurality of gripper arms (23) are designed such that they can be inserted with elastic deformation through the through-hole (17) in the mounting (16) in the direction of the first motor vehicle component (2, 3).

7. Motor vehicle fastening system (12) according to Claim 1, wherein the compensating means (25) is embodied as a flange (26) with a curved cross-section.

8. Motor vehicle fastening system (12) according to any one of the preceding claims, wherein the fastening screw (6) is designed with a screw head (27) having a widened cross-section at the first longitudinal end, so that when bearing on the screw holder (7) the screw head clamps the screw holder (7) against the first motor vehicle component (2, 3), and with a tapered screw-in tip (28) at the second longitudinal end, which is screwed into the screw socket (8) in such a way that the first motor vehicle component (2, 3) is fastened to the second motor vehicle component (1, 4).

## Revendications

1. Système de fixation pour véhicule automobile (12) avec un premier composant de véhicule automobile (2, 3), un deuxième composant de véhicule automobile (1, 4) et au moins un dispositif de fixation (5) constitué pour la fixation amovible du premier composant de véhicule automobile (2, 3) au deuxième composant de véhicule automobile (1,4),
sachant qu'au moins un dispositif de fixation (5) comporte une vis de fixation (6), laquelle est vissée dans une direction de vissage (9) dans un logement de vis (8) constitué dans le deuxième composant de véhicule automobile (1, 4), et un support de vis (7), lequel est logé pouvant être mobile sur le premier composant de véhicule automobile (2, 3) dans une direction (10, 11) passant transversalement à la direction de vissage (9) et est constitué avec un manchon de guidage (14) s'étendant en direction du logement de vis (8) et logeant une section de la vis de fixation (6), sachant qu'un logement (16) est constitué sur une face latérale (15) du premier composant de véhicule automobile (2, 3), éloignée du deuxième composant de véhicule automobile (1, 4) avec un trou de passage (17) et avec des parois de délimitation latérales (18) dans lequel est logé le support de vis (7) pouvant être mobile,
**caractérisé en ce que**
le logement (16) est relié par un moyen de compensation (25) constitué élastiquement déformable au premier composant de véhicule automobile (2, 3) de telle manière que le logement (16) peut être relativement mobile et disposé dans la direction de vissage (9) par rapport au premier composant de véhicule automobile (2, 3).

2. Système de fixation pour véhicule automobile (12) selon la revendication 1, sachant que le manchon de guidage (14) comporte une section (19), laquelle est constituée plus petite que le trou de passage (17), sachant que le manchon de guidage (14) s'étend à travers le trou de passage (17).

3. Système de fixation pour véhicule automobile (12) selon la revendication 1 ou 2, sachant que le support de vis (7) est constitué avec une plaque de base (21) à travers laquelle s'étend le manchon de guidage (14) et lequel est disposé sur la face latérale (15) éloignée du deuxième composant de véhicule automobile (1, 4) du premier composant de véhicule automobile (2, 3) et à l'intérieur du logement (16).

4. Système de fixation pour véhicule automobile (12) selon la revendication 3, sachant que plusieurs éléments de compensation (22) sont conformés sur la plaque de base (21) du support de vis (7), lesquels s'étendent dans une direction passant transversalement à la direction de vissage (9) et lesquels sont constitués à la façon élastique d'un ressort et permettant un mouvement du support de vis (7) à l'intérieur du logement (16) en direction d'une des parois de délimitation (18) latérales.

5. Système de fixation pour véhicule automobile (12) selon l'une quelconque des revendications 1 à 4, sachant que plusieurs bras de préhension (23) sont constitués sur le manchon de guidage (14) du support de vis (7), lesquels s'étendant s'éloignant du manchon de guidage (14) de telle manière que lesdits plusieurs bras de préhension (23) dépassent à travers le trou de passage (17) du logement (16) et saisissent par l'arrière le deuxième composant de véhicule automobile (1, 4) sur une face latérale (24) tournée vers le deuxième composant de véhicule automobile (1, 4) du premier composant de véhicule automobile (2, 3).

6. Système de fixation pour véhicule automobile (12) selon la revendication 5, sachant que plusieurs bras de préhension (23) sont constitués pouvant être élastiquement déformés de telle manière que pour mettre en place le support de vis (7) sur le premier composant de véhicule automobile (2, 3), lesdits plusieurs bras de préhension (23) sont constitués pouvant être emboîtés par une déformation élastique à travers le trou de passage (17) du logement (16) en direction du premier composant de véhicule automobile (2, 3).

7. Système de fixation pour véhicule automobile (12) selon la revendication 1, sachant que le moyen de compensation (25) est constitué sous la forme d'une nervure (26) incurvée en section.

8. Système de fixation pour véhicule automobile (12) selon l'une quelconque des revendications précédentes, sachant que la vis de fixation (6) est constituée sur une première extrémité longitudinale avec une tête de vis (27) élargie en section, laquelle serre le support de vis (7) contre le premier composant de véhicule automobile (2, 3), en appui sur le support de vis (7) et est constitué sur une deuxième extrémité longitudinale avec une extrémité de vissage (28) constituée se réduisant, laquelle est vissée dans le logement de vis (8) fixant le premier composant de véhicule automobile (2, 3) au deuxième composant de véhicule automobile (1, 4).
